(19) Europäisches Patentamt
European Patent Office
Office européen des brevets

(11) **EP 3 525 140 A1**

(12) **EUROPEAN PATENT APPLICATION**

(43) Date of publication:
**14.08.2019 Bulletin 2019/33**

(51) Int Cl.:
***G06N 3/08*** (2006.01)

(21) Application number: **19156236.2**

(22) Date of filing: **08.02.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **09.02.2018 US 201862628311 P**
**14.02.2018 US 201862630278 P**
**18.05.2018 US 201862673143 P**

(71) Applicant: **HTC Corporation**
**Taoyuan City 330, (TW)**

(72) Inventors:
• **CHEN, Sheng-Wei**
**330 Taoyuan City (TW)**
• **CHOU, Chun-Nan**
**330 Taoyuan City (TW)**
• **CHANG, Edward**
**330 Taoyuan City (TW)**

(74) Representative: **Emde, Eric**
**Wagner & Geyer Partnerschaft mbB**
**Patent- und Rechtsanwälte**
**Gewürzmühlstrasse 5**
**80538 München (DE)**

(54) **DEVICE AND METHOD OF TRAINING A FULLY-CONNECTED NEURAL NETWORK**

(57)     A computing device for training a fully-connected neural network (FCNN) comprises at least one storage device; and at least one processing circuit, coupled to the at least one storage device. The at least one storage device stores, and the at least one processing circuit is configured to execute instructions of: computing a block-diagonal approximation of a positive-curvature Hessian (BDA-PCH) matrix of the FCNN; and computing at least one update direction of the BDA-PCH matrix according to an expectation approximation conjugated gradient (EA-CG) method.

FIG. 2

**Description**

Cross Reference To Related Applications

This application claims the benefit of U.S. Provisional Applications No. 62/628,311 filed on Feb. 9, 2018, No. 62/630,278, Filed on Feb. 14, 2018 and No. 62/673,143, filed on May. 18, 2018, which are incorporated herein by reference.

Background of the Invention

1. Field of the Invention

The present invention relates to a device and a method used in a computing system, and more particularly, to a device and a method of training a fully-connected neural network.

2. Description of the Prior Art

Neural networks have been applied to solve problems in several application domains such as computer vision, natural language processing, disease diagnosis, etc. When training a neural network, model parameters of the neural network according to a backpropagation process, stochastic gradient descent (SGD), Broyden-Fletcher-Goldfarb-Shanno and one-step secant are representative algorithms used for realizing the backpropagation process.

SGD minimizes a function by using a function's first derivative, and has been proven to be effective for training large models. However, stochasticity in a gradient slows down convergence for all gradient methods such that none of these gradient methods can be asymptotically faster than simple SGD with Polyak averaging. Besides the gradient methods, second-order methods utilize curvature information of a loss function within neighborhood of a given point to guide an update direction. Since each update becomes more precise, the second-order methods converge faster than first-order methods in terms of update iterations.

To solve a convex optimization problem, a second-order method converges to a global minimum in fewer steps than SGD. However, a problem of training the neural-network can be non-convex, and an issue of a negative curvature occurs. To avoid the issue, a Gauss-Newton matrix with a convex criterion function or a Fisher matrix may be used to measure a curvature, since these matrices are guaranteed to be positive semi-definite (PSD).

Although these matrices can alleviate the issue of the negative curvature, computing the Gauss-Newton matrix or the Fisher matrix even for a modestly-sized fully-connected neural network (FCNN) is intractable. $O(N^2)$ complexity is needed for a second derivative, if $O(N)$ complexity is needed for computing a first derivative. Thus, several methods in the prior art are proposed to approximate these matrices. However, none of the methods are computationally feasible and more effective than the first-order methods. Thus, a computationally feasible and effective second-order methods for training the FCNN is needed.

Summary of the Invention

The present invention therefore provides a device and a method for training a FCNN to solve the abovementioned problem.

A computing device for training a FCNN comprises at least one storage device; and at least one processing circuit, coupled to the at least one storage device. The at least one storage device stores, and the at least one processing circuit is configured to execute instructions of: computing a block-diagonal approximation of a positive-curvature Hessian (BDA-PCH) matrix of the FCNN; and computing at least one update direction of the BDA-PCH matrix according to an expectation approximation conjugated gradient (EA-CG) method.

A method for training a FCNN, comprises computing a BDA-PCH matrix of the FCNN; and computing at least one update direction of the BDA-PCH matrix according to an EA-CG method.

These and other objectives of the present invention will no doubt become obvious to those of ordinary skill in the art after reading the following detailed description of the preferred embodiment that is illustrated in the various figures and drawings.

Brief Description of the Drawings

Fig. 1 is a schematic diagram of a computing device according to an example of the present invention.

Fig. 2 is a flowchart of a process according to an example of the present invention.

Detailed Description

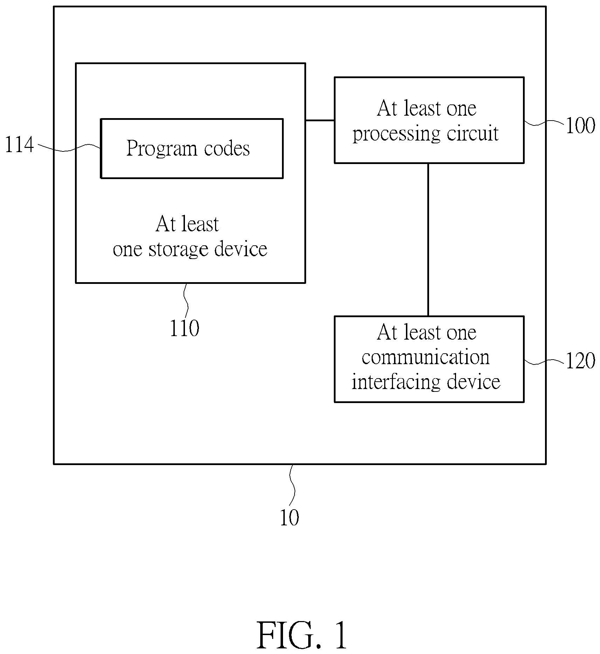

Fig. 1 is a schematic diagram of a computing device 10 according to an example of the present invention. The computing device 10 includes at least one processing circuit 100 such as a microprocessor or Application Specific Integrated Circuit (ASIC), at least one storage device 110 and at least one communication interfacing device 120. The at least one storage device 110 may be any data storage device that may store program codes 114, accessed and executed by the at least one processing circuit 100. Examples of the at least one storage device 110 include but are not limited to a subscriber identity module (SIM), read-only memory (ROM), flash memory, random-access memory (RAM), hard disk, optical data storage device, non-volatile storage device, non-transitory computer-readable medium (e.g., tangible media), etc. The at least one communication interfacing device 120 is used to transmit and receive signals (e.g., information, data, messages and/or packets) according to processing results of the at least one processing circuit 100. The at least one communication interfacing device 120 may be at least one transceiver, at least one interfacing circuit or at least one interfacing board, and is not limited herein. An abovementioned communication interfacing device may be Universal Serial Bus (USB), Institute of Electrical and Electronics Engineers (IEEE) 1394, Serial Advanced Technology Attachment (SATA), Integrated Drive Electronics (IDE), Peripheral Component Interconnect (PCI), or Ethernet.

The present invention provides a block-diagonal approximation of a positive-curvature Hessian (BDA-PCH) matrix, which is memory-efficient. The BDA-PCH matrix can be applied to any fully-connected neural network (FCNN), where an activation function and a criterion function are twice differentiable. The BDA-PCH matrix can handle non-convex criterion functions, which cannot be handled by Gauss-Newton methods. In addition, an expectation approximation (EA) is combined with a conjugated gradient (CG) method, which is termed as an EA-CG method, to derive update directions for training the FCNN in a mini-batch setting. The EA-CG method significantly reduces space complexity and time complexity of conventional CG methods.

A second-order method for training a FCNN is proposed in the present invention as follows:

1. For curvature information, a PCH matrix is proposed to improve a Gauss-Newton matrix for training a FCNN with convex criterion functions, and a non-convex scenario is overcome.
2. To derive update directions, an EA-CG method is proposed. Thus, a second-order method which consists of the BDA-PCH method and the EA-CG method converges faster in terms of wall clock time and enjoys better testing accuracy than competing methods (e.g., SGD).

Truncated-Newton method on non-convex problems

A Newton method is one of second-order minimization methods, and includes two steps: 1) computing a Hessian matrix, and 2) solving a system of linear equations for update directions. A truncated-Newton method applies a CG method with restricted iterations to the second step of the Newton method. In the following description, the truncated-Newton method in context of a convex scenario is first discussed. Then, a non-convex scenario of the truncated-Newton method is discussed, and an important property that lays a foundation of a proposed PCH matrix is provided.

A minimization problem is formulated as follows:

$$\min_{\boldsymbol{\theta}} f(\boldsymbol{\theta}), \quad (1)$$

where $f$ is a convex and twice-differentiable function. Since a global minimum of the function is at a point that a first derivative of the function is zero, the solution $\theta^*$ can be derived from the following equation:

$$\nabla f(\theta^*) = \mathbf{0}. \quad (2)$$

A quadratic polynomial is used to approximate the equation (Eq.1) by conducting a Taylor expansion with a given point $\theta^j$. Then, the equation (Eq.1) can be expressed as follows:

$$\min_{\boldsymbol{d}} f(\boldsymbol{\theta}^j + \boldsymbol{d}) \approx f(\boldsymbol{\theta}^j) + \nabla f(\boldsymbol{\theta}^j)^T \boldsymbol{d} + \frac{1}{2}\boldsymbol{d}^T \nabla^2 f(\boldsymbol{\theta}^j)\boldsymbol{d}, \quad (3)$$

where $\nabla^2 f(\theta^j)$ is a Hessian matrix of $f$ at $\theta^j$. After applying the aforementioned approximation, the equation (Eq.2) can be rewritten as the following linear equation:

$$\nabla f\left(\boldsymbol{\theta}^j\right) + \nabla^2 f\left(\boldsymbol{\theta}^j\right)\boldsymbol{d}^j = \boldsymbol{0}. \quad (4)$$

Thus, a Newton direction can be obtained as follows:

$$\boldsymbol{d}^j = -\nabla^2 f\left(\boldsymbol{\theta}^j\right)^{-1} \nabla f\left(\boldsymbol{\theta}^j\right). \quad (5)$$

$\theta^*$ can be obtained iteratively according to the following equation:

$$\boldsymbol{\theta}^{j+1} = \boldsymbol{\theta}^j + \eta \boldsymbol{d}^j, \quad (6)$$

where $\eta$ is a step size.

For a non-convex scenario, a solution to the equation (Eq.2) reflects one of three possibilities: a local minimum $\theta_{min}$, a local maximum $\theta_{max}$ and a saddle point $\theta_{saddle}$. An important concept is introduced that curvature information of $f$ at a given point $\theta$ can be obtained by analyzing the Hessian matrix $\nabla^2 f(\theta)$. On the one hand, the Hessian matrix of $f$ at any $\theta_{min}$ is positive semi-definite. The Hessian matrix of $f$ at any $\theta_{max}$ and $\theta_{saddle}$ are negative semi-definite and indefinite, respectively. After establishing the concept, a Property is used to understand how to utilize negative curvature information to resolve the issue of negative curvature.

**Property:** Let $f$ be a non-convex and twice-differentiable function. With a given point $\theta^j$, it is supposed that there exist some negative eigenvalues $\{\lambda_1,...,\lambda_s\}$ for $\nabla^2 f(\theta^j)$. Moreover, $V = span\{v_1,...,v_s\}$ is taken, which is an eigenspace corresponding to $\{\lambda_1,...,\lambda_s\}$. If the following equation is considered

$$g(\boldsymbol{k}) = f\left(\boldsymbol{\theta}^j\right) + \nabla f\left(\boldsymbol{\theta}^j\right)^T \boldsymbol{v} + \frac{1}{2}\boldsymbol{v}^T \nabla^2 f\left(\boldsymbol{\theta}^j\right)\boldsymbol{v}, \quad (7)$$

where $\boldsymbol{k} \in \mathbb{R}^s$ and $v = k_1 v_1 + ... + k_s v_s$, then $g(\boldsymbol{k})$ is a concave function.

According to the **Property**, the equation (Eq.4) may lead to a local maximum or a saddle point, if $\nabla^2 f(\theta^j)$ has some negative eigenvalues. In order to converge to a local minimum, $\nabla^2 f(\theta^j)$ is replaced with *Pos-Eig( $\nabla^2 f(\theta^j)$ )*, where *Pos-Eig(A)* is conceptually defined as replacing negative eigenvalues of A with non-negative ones as follows:

$$Post - Eig(\boldsymbol{A}) = \boldsymbol{Q}^T \begin{bmatrix} \gamma\lambda_1 & & & & & \\ & \ddots & & & & \\ & & \gamma\lambda_s & & & \\ & & & \lambda_{s+1} & & \\ & & & & \ddots & \\ & & & & & \lambda_n \end{bmatrix} \boldsymbol{Q}, \quad (8)$$

where $\gamma$ is a given scalar that is smaller than or equal to zero, and $\{\lambda_1,...,\lambda_s\}$ and $\{\lambda_{s+1},...,\lambda_n\}$ are the negative eigenvalues and the non-negative eigenvalues of A, respectively. This refinement implies that the point $\theta^{j+1}$ escapes from either a local maximum or saddle points if $\gamma < 0$. In case of $\gamma = 0$, this refinement means that an eigenspace of the negative eigenvalues is ignored. As a result, the solution does not converge to any saddle point or any local maximum. In addition, every real symmetric matrix can be diagonalized according to a spectral theorem. Under the assumptions made in the present invention, $\nabla^2 f(\theta^j)$ is a real symmetric matrix. Thus, $\nabla^2 f(\theta^j)$ can be decomposed, and the function "*Pos-Eig*" can be realized easily.

When the number of variables in $f$ is large, the Hessian matrix becomes intractable in terms of space complexity. Alternatively, a CG method may be used to solve the equation (Eq.4). This alternative only needs calculating Hessian-vector products rather than storing the whole Hessian matrix. Moreover, it is desirable to restrict the iteration number of the CG method, to save computation cost.

Computing the Hessian Matrix

For a second-order method, a block Hessian matrix is used to compute curvature information. As a basis of a proposed PCH matrix, in the following description, notations for training a FCNN are described and the block Hessian recursion is formulated with the notations.

Fully-connected neural networks

A FCNN with k layers takes an input vector $h_i^0 = x_i$, where $x_i$ is an $i^{th}$ instance in a training set. For the $i^{th}$ instance, activation values in the other layers can be recursively derived according to: $h_i^t = \sigma(W^t h_i^{t-1} + b^t)$, $t = 1,...,k\text{-}1$, where $\sigma$ is an activation function and may be any twice differentiable function, and $W^t$ and $b^t$ are weights and biases in the $t^{th}$ layer, respectively. $n_t$ is the number of the neurons in the $t^{th}$ layer, where $t = 0,...,k$, and all model parameters including all the weights and biases in each layer is formulated as $\theta = (Vec(W^1), b^1,...,Vec(W^k), b^k)$, where $Vec(A) = [[A_{\cdot 1}]^T,...,[A_{\cdot n}]^T]^T$. By following the above notations, a FCNN output with k layers can be formulated as $h_i^k = F(\theta|x_i) = W^k h_i^{k-1} + b^k$.

To train the FCNN, a loss function $\xi$ which can be any twice differentiable function is needed. Training the FCNN can thus be interpreted as solving the following minimization problem:

$$\min_{\theta} \sum_{i=1}^{l} \xi(h_i^k|y_i) \equiv \min_{\theta} \sum_{i=1}^{l} C(\hat{y}_i|y_i), \quad (9)$$

where $l$ is the number of the instances in the training set, $y_i$ is a label of an $i^{th}$ instance, $\hat{y}_i$ is $\text{softmax}(h_i^k)$, and $C$ is a criterion function.

Layer-wise equations for the Hessian matrix

For a lucid exposition of a block Hessian recursion, equations of a backpropagation are formulated according to the notations defined in the previous description. The bias term $b^t$ and the weight term $W^t$ are separated, and are treated individually during a backward propagation of gradients. The gradients of $\xi$ with respect to the bias term and the weight term can be derived according to the formulated equations in a layer-wise manner. For the $i^{th}$ instance, the formulated equations are as follows:

$$\nabla_{b^k} \xi_i = \nabla_{h_i^k} \xi_i, \quad (10)$$

$$\nabla_{b^{t-1}} \xi_i = diag\left(h_i^{(t-1)'}\right) W^{tT} \nabla_{b^t} \xi_i, \quad (11)$$

$$\nabla_{W^t} \xi_i = \nabla_{b^t} \xi_i \otimes h_i^{(t-1)T}, \quad (12)$$

where $\xi_i = \xi(h_i^k|y_i)$, $\otimes$ is the Kronecker product, and $h_i^{(t-1)'} = \nabla_z \sigma(z)|_{z=W^{t-1}h_i^{t-2}+b^{t-1}}$. Likewise, the Hessian matrix of $\xi$ is propagated with respect to the bias term and the weight term backward in the layer-wise manner. This can be achieved by utilizing the Kronecker product according to the above manner. The resulted equations for the $i^{th}$ instance are as follows:

$$\nabla_{b^k}^2 \xi_i = \nabla_{h_i^k}^2 \xi_i, \quad (13)$$

$$\nabla_{\boldsymbol{b}^{t-1}}^2 \xi_i = diag\left(\boldsymbol{h}_i^{(t-1)\prime}\right)\boldsymbol{W}^{tT}\nabla_{\boldsymbol{b}^t}^2 \xi_i \boldsymbol{W}^t diag\left(\boldsymbol{h}_i^{(t-1)\prime}\right) + diag\left(\boldsymbol{h}_i^{(t-1)\prime\prime}\odot(\boldsymbol{W}^{tT}\nabla_{\boldsymbol{b}^t}\xi_i)\right) \quad ,$$

(14)

$$\nabla_{\boldsymbol{W}^t}^2 \xi_i = \left(\boldsymbol{h}_i^{(t-1)} \otimes \boldsymbol{h}_i^{(t-1)T}\right) \otimes \nabla_{\boldsymbol{b}^t}^2 \xi_i, \quad (15)$$

where $\odot$ the element-wise product, $\left[\boldsymbol{h}_i^{(t-1)\prime\prime}\right]_s = \left[\nabla_z^2\sigma(\boldsymbol{z})\big|_{\boldsymbol{z}=\boldsymbol{W}^{t-1}\boldsymbol{h}_i^{t-2}+\boldsymbol{b}^{t-1}}\right]_{ss}$, and a derivative order of $\nabla_{\boldsymbol{W}^t}^2 \xi_i$ is a column-wise traversal of $\boldsymbol{W}^t$. Moreover, it is worth noting that the original block Hessian recursion unifying the bias term and the weight term, which is distinct from our separate treatment of these terms.

Expectation approximation

The idea behind expectation approximation is that a covariance between $\left[\boldsymbol{h}_i^{(t-1)} \otimes \boldsymbol{h}_i^{(t-1)T}\right]_{uv}$ and $[\nabla_{\boldsymbol{b}^t}\xi_i \otimes \nabla_{\boldsymbol{b}^t}\xi_i^T]_{\mu v}$ with given indices $(u,v)$ and $(\mu,v)$ is shown to be tiny, and thus is ignored due to computational efficiency according to the following equation:

$$\mathbb{E}_i\left[\left[\boldsymbol{h}_i^{(t-1)} \otimes \boldsymbol{h}_i^{(t-1)T}\right]_{uv} \cdot [\nabla_{\boldsymbol{b}^t}\xi_i \otimes \nabla_{\boldsymbol{b}^t}\xi_i^T]_{\mu v}\right]$$

$$\approx \mathbb{E}_i\left[\left[\boldsymbol{h}_i^{(t-1)} \otimes \boldsymbol{h}_i^{(t-1)T}\right]_{uv}\right] \cdot \mathbb{E}_i\left[[\nabla_{\boldsymbol{b}^t}\xi_i \otimes \nabla_{\boldsymbol{b}^t}\xi_i^T]_{\mu v}\right]. \quad (16)$$

To explain this concept on the above formulations, *cov-t* is defined as $Ele - Cov\left(\left(\boldsymbol{h}_i^{(t-1)} \otimes \boldsymbol{h}_i^{(t-1)T}\right) \otimes \boldsymbol{1}_{n_t,n_t}, \boldsymbol{1}_{n_{t-1},n_{t-1}} \otimes \nabla_{\boldsymbol{b}^t}^2\xi_i\right),$ where "*Ele-Cov*" is denoted as an element-wise covariance, and $\boldsymbol{1}_{u,v}$ is a matrix whose elements are 1 in $\mathbb{R}^{u \times v}$, $t = 1,...,k$. With the definition of *cov-t* and the previous equations, the approximation can be interpreted as follows:

$$\mathbb{E}_i[\nabla_{\boldsymbol{W}^t}^2\xi_i] = \text{EhhT}^{t-1} \otimes \mathbb{E}_i[\nabla_{\boldsymbol{b}^t}^2\xi_i] + cov - t,$$

$$\approx \text{EhhT}^{t-1} \otimes \mathbb{E}_i[\nabla_{\boldsymbol{b}^t}^2\xi_i], \quad (17)$$

where

$$\text{EhhT}^{t-1} = \mathbb{E}_i\left[\boldsymbol{h}_i^{t-1} \otimes \boldsymbol{h}_i^{(t-1)T}\right].$$

Then, the following approximation equation can be obtained:

$$\mathbb{E}_i\big[\nabla^2_{b^{t-1}}\xi_i\big]$$

$$\approx \mathbb{E}_i\Big[diag\big(h_i^{(t-1)\prime}\big)W^{tT}\mathbb{E}_i\big[\nabla^2_{b^t}\xi_i\big]W^t diag\big(h_i^{(t-1)\prime}\big) + diag\big(h_i^{(t-1)\prime\prime}\odot(W^{tT}\nabla_{b^t}\xi_i)\big)\Big],$$

$$= \big(W^{tT}\mathbb{E}_i[\nabla^2_{b^t}\xi_i]W^t\big)\odot\text{EhhT}^{(t-1)\prime} + \mathbb{E}_i\Big[diag\big(h_i^{(t-1)\prime\prime}\odot(W^{tT}\nabla_{b^t}\xi_i)\big)\Big], \quad (18)$$

$$\text{EhhT}^{(t-1)\prime} = \mathbb{E}_i\Big[h_i^{(t-1)\prime}\otimes h_i^{(t-1)\prime T}\Big].$$

where                                                                    The difference between the original Hessian matrix and the approximate Hessian matrix in the equation (Eq.18) is bounded as follows:

$$\Big\|Ele - Cov\big(W^{tT}\nabla^2_{b^t}\xi_i W^t, h_i^{(t-1)\prime}\otimes h_i^{(t-1)\prime T}\big)\Big\|^2_F$$

$$\leq L^4\sum_{\mu,\nu}Var\Big(\big[W^{tT}\nabla^2_{b^t}\xi_i W^t\big]_{\mu\,\nu}\Big), \quad (19)$$

where $L$ is a Lipschitz constant of the activation functions. For example, $L_{ReLU}$ and $L_{sigmoid}$ are 1 and 0.25, respectively.

Deriving the Newton direction

A computationally feasible method for training a FCNN with Newton directions is proposed in the present invention. First, a PCH matrix is constructed. Then, based on the PCH matrix, an efficient CG-based method incorporating the expectation approximation to derive the Newton directions for multiple training instances, call the EA-CG method, is proposed.

PCH matrix

Based on the layer-wise equations and the integration of the expectation approximation, block matrices with various sizes are constructed, and are located at a diagonal of the Hessian matrix. This block-diagonal matrix $\mathbb{E}_i\big[\overline{\nabla^2_\theta}\xi_i\big]$ is represented as $diag\big(\mathbb{E}_i[\nabla^2_{W^1}\xi_i],\mathbb{E}_i[\nabla^2_{b^1}\xi_i],\dots,\mathbb{E}_i[\nabla^2_{W^k}\xi_i],\mathbb{E}_i[\nabla^2_{b^k}\xi_i]\big).$ Please note that $\mathbb{E}_i\big[\overline{\nabla^2_\theta}\xi_i\big]$ is a block-diagonal Hessian matrix, and is not the complete Hessian matrix. According to the description for the three possibilities of the update directions, $\mathbb{E}_i\big[\overline{\nabla^2_\theta}\xi_i\big]$ should be modified. Thus, $\mathbb{E}_i\big[\overline{\nabla^2_\theta}\xi_i\big]$ is replaced with $diag\Big(\mathbb{E}_i\big[\widehat{\nabla^2_{W^1}}\xi_i\big],\mathbb{E}_i\big[\widehat{\nabla^2_{b^1}}\xi_i\big],\dots,\mathbb{E}_i\big[\widehat{\nabla^2_{W^k}}\xi_i\big],\mathbb{E}_i\big[\widehat{\nabla^2_{b^k}}\xi_i\big]\Big),$ and the modified result is denoted as $\mathbb{E}_i\big[\widehat{\nabla^2_\theta}\xi_i\big],$ where

$$\mathbb{E}_i\big[\widehat{\nabla^2_{b^k}}\xi_i\big] = Pos - Eig\Big(\mathbb{E}_i\big[\nabla^2_{h_i^k}\xi_i\big]\Big), \quad (20)$$

$$\mathbb{E}_i\big[\widehat{\nabla^2_{b^{t-1}}}\xi_i\big] = \big(W^{tT}\mathbb{E}_i\big[\widehat{\nabla^2_{b^t}}\xi_i\big]W^t\big)\odot\text{EhhT}^{(t-1)\prime} + Pos -$$

$$Eig\Big(diag\big(\mathbb{E}_i\big[h_i^{(t-1)\prime\prime}\odot(W^{tT}\nabla_{b^t}\xi_i)\big]\big)\Big), \quad (21)$$

$$\mathbb{E}_i \left[ \widehat{\nabla^2_{W^t}} \xi_i \right] = \mathrm{EhhT}^{t-1} \otimes \mathbb{E}_i \left[ \widehat{\nabla^2_{b^t}} \xi_i \right]. \quad (22)$$

$\mathbb{E}_i \left[ \widehat{\nabla^2_\theta} \xi_i \right]$ can be seen as a BDA-PCH matrix. Any PCH matrix can be guaranteed to be PSD, which is explained as follows. In order to show hat $\mathbb{E}_i \left[ \widehat{\nabla^2_\theta} \xi_i \right]$ is PSD, both $\mathbb{E}_i \left[ \widehat{\nabla^2_{b^t}} \xi_i \right]$ and $\mathbb{E}_i \left[ \widehat{\nabla^2_{W^t}} \xi_i \right]$ should be proved to be PSD for any $t$. First, the block matrix $\mathbb{E}_i \left[ \widehat{\nabla^2_{h_i^k}} \xi_i \right]$ is considered to be a $n_k \times n_k$ square matrix in the equation (Eq.20). If the criterion function $C(\hat{y}_i|y_i)$ is convex, $\mathbb{E}_i \left[ \nabla^2_{h_i^k} \xi_i \right]$ is a PSD matrix. Otherwise, the matrix is decomposed, and negative eigenvalues of the matrix is replaced. Since $n_k$ is usually not very large, $\mathbb{E}_i \left[ \nabla^2_{h_i^k} \xi_i \right]$ can be decomposed quickly and can be modified to a PSD matrix $\mathbb{E}_i \left[ \widehat{\nabla^2_{h_i^k}} \xi_i \right]$. Second, $\mathbb{E}_i \left[ \widehat{\nabla^2_{b^t}} \xi_i \right]$ is supposed to be a PSD matrix, and $\left( W^{tT} \mathbb{E}_i \left[ \widehat{\nabla^2_{b^t}} \xi_i \right] W^t \right) \odot \mathrm{EhhT}^{(t-1)'}$ is PSD. Thus, the negative eigenvalues of $\mathbb{E}_i \left[ \widehat{\nabla^2_{b^t}} \xi_i \right]$ stems form the diagonal part $diag \left( \mathbb{E}_i \left[ h_i^{(t-1)''} \odot (W^{tT} \nabla_{b^t} \xi_i) \right] \right)$, and *Pos-Eig* is performed for the diagonal part in the equation (Eq.21). Third, because the Kronecker product of two PSD matrices is PSD, it implies that $\mathbb{E}_i \left[ \widehat{\nabla^2_{W^t}} \xi_i \right]$ is PSD.

Solving the linear equation via the EA-CG method

After obtaining the PCH matrix $\mathbb{E}_i \left[ \widehat{\nabla^2_\theta} \xi_i \right]$, the update direction is updated by solving the following linear equation:

$$\left( (1-\alpha) \mathbb{E}_i \left[ \widehat{\nabla^2_\theta} \xi_i \right] + \alpha I \right) d_\theta = -\mathbb{E}_i [\nabla_\theta \xi_i], \quad (23)$$

where $0 < \alpha < 1$ and $d_\theta = \left[ d_{W^1}^T, d_{b^1}^T, \ldots, d_{W^k}^T, d_{b^k}^T \right]^T$. Here, the weighted average of $\mathbb{E}_i \left[ \widehat{\nabla^2_\theta} \xi_i \right]$ and an identity matrix $I$ are used, because this average turns the coefficient matrix of the equation (Eq.23) that is PSD to positive definite and thus makes the solutions more stable. Due to the essence of the diagonal blocks, the equation (Eq.23) can be decomposed as follows:

$$\left( (1-\alpha) \mathbb{E}_i \left[ \widehat{\nabla^2_{b^t}} \xi_i \right] + \alpha I \right) d_{b^t} = -\mathbb{E}_i [\nabla_{b^t} \xi_i], \quad (24)$$

$$\left( (1-\alpha) \mathbb{E}_i \left[ \widehat{\nabla^2_{W^t}} \xi_i \right] + \alpha I \right) d_{W^t} = -Vec(\mathbb{E}_i [\nabla_{W^t} \xi_i]), \quad (25)$$

for t = 1,...,k. To solve the equation (Eq.24), the solutions are obtained by using the CG method directly. For the equation (Eq.24), since storing $\mathbb{E}_i\left[\widehat{\nabla^2_{W^t}}\xi_i\right]$ is not efficient, the equation $(C^t \otimes A)Vec(B) = Vec(ABC)$ and the equation (Eq.17) are processed to have the Hessian-vector product with a given vector $Vec(P)$ as follows:

$$\mathbb{E}_i\left[\widehat{\nabla^2_{W^t}}\xi_i\right]Vec(P) = Vec\left(\mathbb{E}_i\left[\widehat{\nabla^2_{b^t}}\xi_i\right] \cdot P \cdot \mathbb{E}_i\left[h_i^{t-1} \otimes h_i^{(t-1)T}\right]\right),$$

$$\approx Vec\left(\mathbb{E}_i\left[\widehat{\nabla^2_{b^t}}\xi_i\right] \cdot P \cdot \mathbb{E}_i[h_i^{t-1}] \otimes \mathbb{E}_i\left[h_i^{(t-1)T}\right]\right), \quad (26)$$

Based on the equation (Eq.26), the Hessian-vector products of $\mathbb{E}_i\left[\widehat{\nabla^2_{W^t}}\xi_i\right]$ via $\mathbb{E}_i\left[\widehat{\nabla^2_{b^t}}\xi_i\right]$ are obtained, and the space complexity of storing the curvature information is reduced.

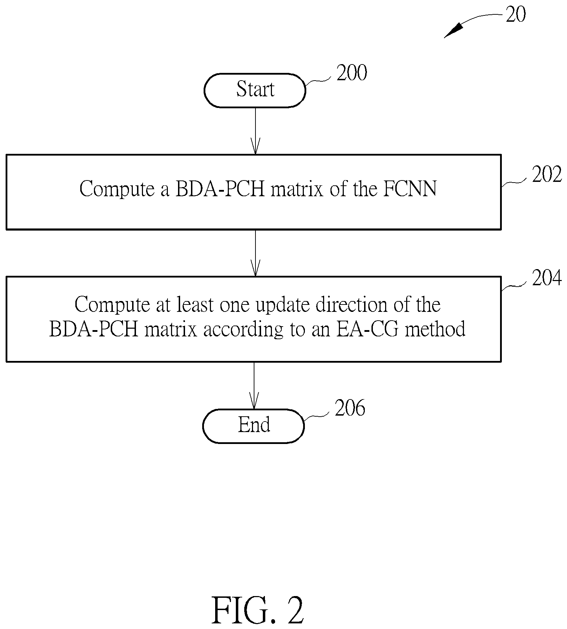

The above description can be summarized into a process 20 shown in Fig. 2, and can be compiled into the program codes 114. The process 20 includes the following steps:

Step 200: Start.
Step 202: Compute a BDA-PCH matrix of the FCNN.
Step 204: Compute at least one update direction of the BDA-PCH matrix according to an EA-CG method.
Step 206: End.

Details and variations of the process 20 can be referred to the above illustration, and are not narrated herein.

It should be noted that although the above examples are illustrated to clarify the related operations of corresponding processes. The examples can be combined and/or modified arbitrarily according to system requirements and/or design considerations.

Those skilled in the art should readily make combinations, modifications and/or alterations on the abovementioned description and examples. The abovementioned description, steps and/or processes including suggested steps can be realized by means that could be hardware, software, firmware (known as a combination of a hardware device and computer instructions and data that reside as read-only software on the hardware device), an electronic system, or combination thereof. An example of the means may be the computing device 10. In the above description, the examples (including related equations) may be compiled into the program codes 214.

To sum up, a PCH matrix and an EA-CG method are proposed to achieve more computationally feasible second-order methods for training a FCNN. The proposed PCH matrix overcomes the problem of training the FCNN with non-convex criterion functions. In addition, the EA-CG method provides another alternative to efficiently derive update directions. Empirical studies show that the proposed PCH matrix performs better than the state-of-the-art curvature approximation, and the EA-CG method converges faster while having a better testing accuracy.

Those skilled in the art will readily observe that numerous modifications and alterations of the device and method may be made while retaining the teachings of the invention. Accordingly, the above disclosure should be construed as limited only by the metes and bounds of the appended claims.

**Claims**

1. A computing device for training a fully-connected neural network (FCNN), comprising:

   at least one storage device; and
   at least one processing circuit, coupled to the at least one storage device, wherein the at least one storage device stores, and the at least one processing circuit is configured to execute instructions of:

   computing a block-diagonal approximation of a positive-curvature Hessian (BDA-PCH) matrix of the FCNN; and
   computing at least one update direction of the BDA-PCH matrix according to an expectation approximation conjugated gradient (EA-CG) method.

2. The computing device of claim 1, wherein the BDA-PCH matrix is computed by performing at least one expectation on a plurality of layer-wise equations.

3. The computing device of claim 2, wherein the plurality of layer-wise equations comprise a gradient of a plurality of loss functions at a plurality of layers with respect to at least one bias or a gradient of a plurality of loss functions at a plurality of layers with respect to at least one weight.

4. The computing device of claim 1, wherein the BDA-PCH matrix comprises at least one expectation of a Hessian of a loss function with respect to at least one bias.

5. The computing device of claim 1, wherein the instruction of computing the at least one update direction according to the EA-CG method comprises:

   computing a linear equation of a weighted average of the BDA-PCH matrix and an identity matrix; and
   computing the at least one update direction by solving the linear equation according to the EA-CG method.

6. The computing device of claim 5, wherein the linear equation comprises the weighted average of the BDA-PCH matrix with respect to at least one bias and the identity matrix.

7. The computing device of claim 5, wherein the linear equation comprises the weighted average of the BDA-PCH matrix with respect to at least one weight and the identity matrix.

8. A method for training a fully-connected neural network (FCNN), comprising:

   computing a block-diagonal approximation of a positive-curvature Hessian (BDA-PCH) matrix of the FCNN; and
   computing at least one update direction of the BDA-PCH matrix according to an expectation approximation conjugated gradient (EA-CG) method.

9. The method of claim 8, wherein the BDA-PCH matrix is computed by performing at least one expectation on a plurality of layer-wise equations.

10. The method of claim 9, wherein the plurality of layer-wise equations comprise a gradient of a plurality of loss functions at a plurality of layers with respect to at least one bias.

11. The method of claim 9, wherein the plurality of layer-wise equations comprise a gradient of a plurality of loss functions at a plurality of layers with respect to at least one weight.

12. The method of claim 8, wherein the BDA-PCH matrix comprises at least one first expectation of a Hessian of a loss function with respect to at least one bias.

13. The method of claim 8, wherein the instruction of computing the at least one update direction according to the EA-CG method comprises:

   computing a linear equation of a weighted average of the BDA-PCH matrix; and
   computing the at least one update direction by solving the linear equation according to the EA-CG method.

14. The method of claim 13, wherein the linear equation comprises the weighted average of the BDA-PCH matrix with respect to at least one bias and the identity matrix.

15. The method of claim 13, wherein the linear equation comprises the weighted average of the BDA-PCH matrix with respect to at least one weight and the identity matrix.

114 — Program codes

At least
one storage device

110

At least one
processing circuit — 100

At least one
communication
interfacing device — 120

10

FIG. 1

20

```
                    ┌──────────────┐
                    │    Start     │──── 200
                    └──────┬───────┘
                           │
                           ▼
 ┌─────────────────────────────────────────────────┐
 │  Compute a BDA-PCH matrix of the FCNN           │──── 202
 └─────────────────────────┬───────────────────────┘
                           │
                           ▼
 ┌─────────────────────────────────────────────────┐──── 204
 │    Compute at least one update direction of the │
 │  BDA-PCH matrix according to an EA-CG method     │
 └─────────────────────────┬───────────────────────┘
                           │
                           ▼
                    ┌──────────────┐
                    │     End      │──── 206
                    └──────────────┘
```

# FIG. 2

Europäisches
Patentamt

European
Patent Office

Office européen
des brevets

# EUROPEAN SEARCH REPORT

Application Number

EP 19 15 6236

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HUISHUAI ZHANG ET AL: "Block-diagonal Hessian-free Optimization for Training Neural Networks", ARXIV.ORG, CORNELL UNIVERSITY LIBRARY, 201 OLIN LIBRARY CORNELL UNIVERSITY ITHACA, NY 14853, 20 December 2017 (2017-12-20), XP080847716, * abstract * * page 2 - page 5 * * Algorithm 1 * | 1-15 | INV. G06N3/08 |
| X,P | Sheng-Wei Chen ET AL: "BDA-PCH: Block-Diagonal Approximation of Positive-Curvature Hessian for Training Neural Networks", , 20 February 2018 (2018-02-20), XP055599429, Retrieved from the Internet: URL:https://arxiv.org/pdf/1802.06502v2.pdf [retrieved on 2019-06-25] * the whole document * | 1-15 | |
| A | CHIEN-CHIH WANG ET AL: "Distributed Newton Methods for Deep Neural Networks", ARXIV.ORG, CORNELL UNIVERSITY LIBRARY, 201 OLIN LIBRARY CORNELL UNIVERSITY ITHACA, NY 14853, 1 February 2018 (2018-02-01), XP081219198, * the whole document * | 1-15 | TECHNICAL FIELDS SEARCHED (IPC) G06N |

-/--

The present search report has been drawn up for all claims

| Place of search | Date of completion of the search | Examiner |
|---|---|---|
| The Hague | 28 June 2019 | Tsakonas, Athanasios |

EPO FORM 1503 03.82 (P04C01)

page 1 of 2

Europäisches
Patentamt

European
Patent Office

Office européen
des brevets

**EUROPEAN SEARCH REPORT**

Application Number

EP 19 15 6236

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | James Martens ET AL: "Optimizing Neural Networks with Kronecker-factored Approximate Curvature", , 4 May 2016 (2016-05-04), XP055598867, Retrieved from the Internet: URL:https://arxiv.org/pdf/1503.05671.pdf [retrieved on 2019-06-24] * the whole document * ----- | 1-15 | |
| A | James Martens: "Deep learning via Hessian-free optimization", Proceedings of the 27th International Conference on Machine Learning - ICML 2010, 21 June 2010 (2010-06-21), pages 735-742, XP055512306, Haifa, Israel ISBN: 978-1-60558-907-7 Retrieved from the Internet: URL:https://icml.cc/Conferences/2010/papers/458.pdf [retrieved on 2018-10-04] * the whole document * ----- | 1-15 | |

TECHNICAL FIELDS
SEARCHED       (IPC)

The present search report has been drawn up for all claims

| Place of search | Date of completion of the search | Examiner |
|---|---|---|
| The Hague | 28 June 2019 | Tsakonas, Athanasios |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 3 525 140 A1**

**REFERENCES CITED IN THE DESCRIPTION**

**Patent documents cited in the description**

- US 62628311 A
- US 62630278 B
- US 62673143 B